# EUROPÄISCHE PATENTSCHRIFT

(11) **EP 2 504 746 B1**
(45) Veröffentlichungstag und Bekanntmachung des Hinweises auf die Patenterteilung: **25.10.2017**
(21) Anmeldenummer: 10788017.1
(22) Anmeldetag: 26.11.2010
(51) Int. Cl.: G06F 3/033, B60K 37/06

(54) **BEDIENVORRICHTUNG IN EINEM KRAFTFAHRZEUG**
OPERATOR CONTROL APPARATUS IN A MOTOR VEHICLE
DISPOSITIF DE COMMANDE DANS UN VÉHICULE À MOTEUR

(30) Priorität: 27.11.2009 DE 102009056186
(43) Veröffentlichungstag der Anmeldung: 03.10.2012
(73) Patentinhaber: Audi AG, 85045 Ingolstadt (DE); Audi Electronics Venture GmbH, 85080 Gaimersheim (DE)
(72) Erfinder: TOVAR, Johannes, 85049 Ingolstadt (DE); BOUAZIZ, Tahar, 85055 Ingolstadt (DE); SACHER, Heike, 80797 München (DE)
(74) Vertreter: Brandt, Kai
(86) Internationale Anmeldenummer: PCT/EP2010/007184
(87) Internationale Veröffentlichungsnummer: WO 2011/063973

(56) Entgegenhaltungen:
- EP-A2- 0 181 196
- WO-A1-02/35333
- DE-A1- 10 304 720
- DE-A1-102004 031 659
- GB-A- 2 299 394
- JP-A- 2002 225 724
- US-A- 5 231 380
- US-A- 5 339 213
- US-A- 6 025 831
- US-A1- 2004 140 959
- US-A1- 2006 022 954
- US-A1- 2009 132 130
- Katsunori Hamaya ET AL: "Translation of JP2002225724" In: "Translation of JP2002225724", 14 August 2002 (2002-08-14), XP055334417,

## Beschreibung

Die Erfindung betrifft eine Vorrichtung zur Bedienung wenigstens einer Funktion eines Kraftfahrzeugs und/oder wenigstens eines in einem Kraftfahrzeug eingebauten Geräts nach der im Oberbegriff von Anspruch 1 näher definierten Art.

Eine gattungsgemäße Bedienvorrichtung ist aus der US 2009/0132130 A1 bekannt. Ähnliche Lösungen zeigen auch die JP 2002-225724 A und die US 2004/140959 A1. Eine weitere derartige Bedienvorrichtung ist aus der DE 10 2004 031 659 A1 bekannt. Dabei ist auf einer Armlehne ein Zusatzbedienelement angeordnet, das ein im Bereich des Armaturenbretts vorhandenes Bedienelement ergänzt. Das Zusatzbedienelement kann eine transparente berührungssensitive Schicht aufweisen, unter der jedoch noch weitere Bestandteile des Zusatzbedienelements angeordnet sind, so dass das Zusatzbedienelement zwar transparent ist, die darunterliegende Oberfläche jedoch nicht erkennbar ist.

Eine weitere solche Vorrichtung ist beispielsweise aus der DE 103 04 704 A1 oder der DE 103 04 720 A1 bekannt. Solche sogenannten Touchpads, also berührungssensitive Eingabefelder, halten in jüngster Zeit auch im Innenraum von Kraftfahrzeugen ihren Einzug, da sie zur Bedienung der verschiedensten Funktionen des Kraftfahrzeugs oder eines in dem Kraftfahrzeug eingebauten Geräts, wie beispielsweise eines Navigationsgeräts oder dergleichen, eingesetzt werden können.

Transparente Eingabevorrichtungen für Kraftfahrzeuge sind außerdem aus den Dokumenten US2009/132130 A1, JP2002-225724A, und US2004/140959 A1 bekannt.

Um eine sinnvolle Bedienung zu ermöglichen, benötigen diese Bedienfelder jedoch eine relativ große Fläche, was insbesondere bei hochwertigen Fahrzeugen mit einer entsprechend hochwertigen Innenausstattung als störend angesehen wird, da für die Touchpads teilweise sehr große Bereiche der Innenverkleidung ausgespart werden müssen, was die Optik im Innenraum des Kraftfahrzeugs erheblich stört.

Es ist daher Aufgabe der vorliegenden Erfindung, eine Vorrichtung zur Bedienung mehrerer Funktionen eines Kraftfahrzeugs oder eines in einem Kraftfahrzeug eingebauten Geräts zu schaffen, welches als möglichst geringe Störung des Innenraumdesigns angesehen wird.

Erfindungsgemäß wird diese Aufgabe durch die in Anspruch 1 genannten Merkmale gelöst.

Dadurch, dass das berührungssensitive Eingabefeld aus einem transparenten Material ausgebildet ist, kann es auf einer beliebigen Unterlage im Innenraum des Kraftfahrzeugs angebracht werden ohne das Innenraumdesign zu stören, und ohne dass es erforderlich ist, eine Aussparung oder dergleichen an der Unterlage vorzusehen. Erfindungsgemäß ergibt sich auf diese Weise eine gegenüber bekannten Lösungen erheblich verbesserte Designfreiheit für den Bereich, in dem das berührungssensitive Eingabefeld angeordnet ist. Erfindungsgemäß ist durch das berührungssensitive Eingabefeld das Material und die Oberfläche der Unterlage erkennbar, was insbesondere dann von Vorteil ist, wenn die Oberfläche der Unterlage aus einem hochwertigen Material, wie Holz, Metall oder Leder besteht, da dann ein besonders hochwertiger Eindruck im Innenraum des Kraftfahrzeugs entsteht.

Um einen schwebenden Eindruck des berührungssensitiven Eingabefelds zu erreichen, ist dess Weiteren vorgesehen, dass das berührungssensitive Eingabefeld mit einem Abstand von einer Unterlage angeordnet ist.

Dieser schwebende Eindruck wird noch verstärkt, wenn der Abstand des berührungssensitiven Eingabefelds von der Unterlage mindestens 3 mm beträgt.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine erste Ausführungsform der erfindungsgemäßen Vorrichtung;
- Fig. 2: eine zweite Ausführungsform der erfindungsgemäßen Vorrichtung;
- Fig. 3: eine dritte Ausführungsform der erfindungsgemäßen Vorrichtung;
- Fig. 4: eine vierte Ausführungsform der erfindungsgemäßen Vorrichtung, und
- Fig. 5: eine Ansicht der erfindungsgemäßen Vorrichtung gemäß dem Pfeil V aus Fig. 1.

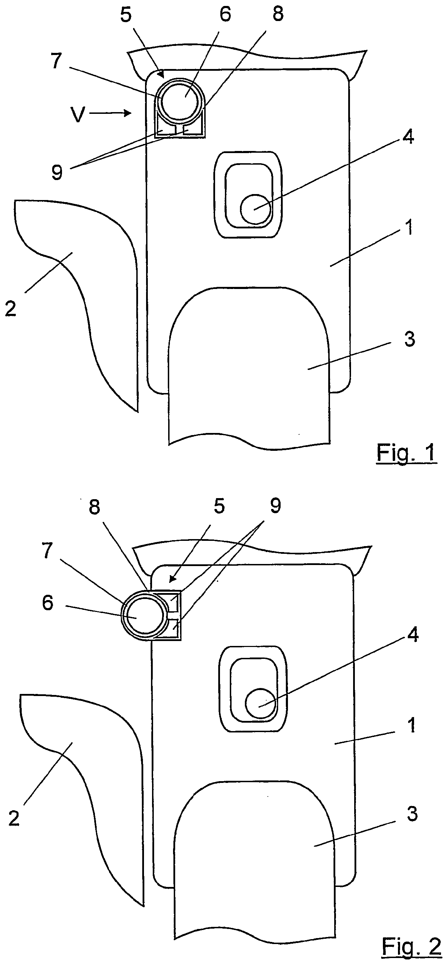

Fig.1 zeigt in einer sehr schematischen Darstellung einen Teil einer Mittelkonsole 1 in einem Innenraum eines in seiner Gesamtheit nicht dargestellten Kraftfahrzeugs. Benachbart zu der Mittelkonsole 1 befindet sich ein ebenfalls nicht vollständig dargestellter Fahrzeugssitz 2. Oberhalb der Mittelkonsole 1 ist in an sich bekannter Weise eine Armauflage bzw. Armlehne 3 angeordnet, die gegebenenfalls klappbar sein kann.

Neben einem Schaltwählhebel 4 befindet sich an der Mittelkonsole 1 außerdem eine Vorrichtung 5 zur Bedienung wenigstens einer Funktion des Kraftfahrzeugs und/oder wenigstens eines in dem Kraftfahrzeug eingebauten Geräts. Mit der Vorrichtung 5 lassen sich die verschiedensten Funktionen des Kraftfahrzeugs, wie beispielsweise die Einstellung von Stoßdämpfern, bestimmte Motorkennfelder und dergleichen, sowie verschiedene Funktionen unterschiedlicher, in dem Kraftfahrzeug eingebauter Geräte, wie z. B. eines Navigationsgeräts, einer Klimaanlage, einer Geschwindigkeitsregelanlage oder dergleichen, bedienen.

Hierzu weist die Vorrichtung 5 im vorliegenden Fall unter anderem ein berührungssensitives Eingabefeld 6 auf, welches aus einem transparenten Material ausgebildet ist, so dass durch das berührungssensitive Eingabefeld 6 das Material und die Oberfläche der Mittelkonsole 1 erkennbar ist. Dies ist insbesondere dann von Vorteil, wenn die Oberfläche der Mittelkonsole 1 aus einem hochwertigen Material, wie Holz, Metall oder Leder besteht, da dann ein besonders hochwertiger Eindruck im Innenraum des Kraftfahrzeugs entsteht. Mit einem derartigen berührungssensitiven Eingabefeld 6 kann beispielsweise eine Schrifterkennung eingesetzt werden, um eine besonders komfortable Bedienung des Kraftfahrzeugs bzw. des in demselben eingebauten Geräts zu erreichen.

Neben dem berührungssensitiven Eingabefeld 6 weist die Vorrichtung 5 im vorliegenden Fall des Weiteren einen das berührungssensitiven Eingabefeld 6 umgebenden, drehbaren Ring 7 auf, welcher als Eingabeeinrichtung zur Bedienung wenigstens einer Funktion des Kraftfahrzeugs und/oder des in dem Kraftfahrzeug eingebauten Geräts ausgebildet ist. Mit dem drehbaren Ring 7 kann also die Funktionalität des berührungssensitiven Eingabefelds 6 erweitert werden. Zusätzlich weist die Vorrichtung 5 im dargestellten Ausführungsbeispiel auch zwei auf einem das berührungssensitiven Eingabefeld 6 und den drehbaren Ring 7 einfassenden Rahmen 8 angeordnete, vorzugsweise als Druckschalter ausgebildete Schaltelemente 9 auf, die ebenfalls bestimmte Bedienfunktionen für das Kraftfahrzeug und/oder das darin eingebaute Gerät übernehmen können.

Während bei der Ausführungsform von Fig. 1 die Vorrichtung 5 mit dem Rahmen 8 vollständig oberhalb der Mittelkonsole 1 angebracht ist, steht sie bei der Ausführungsform gemäß Fig. 2 über die Mittelkonsole über, so dass sich andere Bedienmöglichkeiten und andere Möglichkeiten zur Auflage des Arms der Bedienperson ergeben.

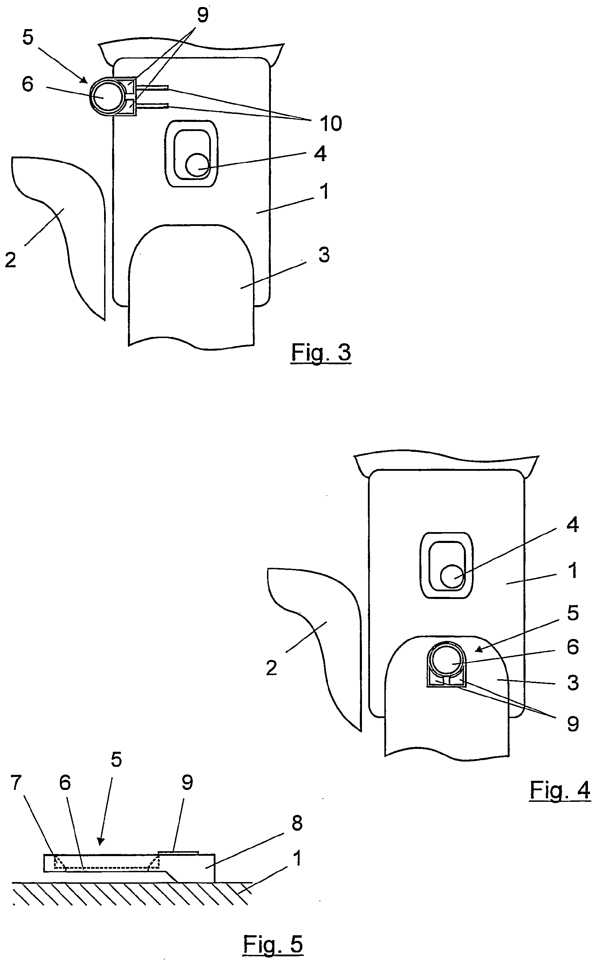

Fig. 3 zeigt eine Ausführungsform der Vorrichtung 5, bei welcher der Rahmen 8 mit dem berührungssensitiven Eingabefeld 6 auf wenigstens einer, im vorliegenden Fall auf zwei parallel zueinander verlaufenden Schienen 10 montiert ist, so dass sich eine Möglichkeit zur Verschiebung des Rahmens 8 mit dem berührungssensitiven Eingabefeld 6, dem drehbaren Ring 7 und den Schaltelementen 9 ergibt. Gegebenenfalls können die Schienen 10 auch eine gekrümmte Bahn bilden.

Der Ausführungsform von Fig. 4 ist zu entnehmen, dass die Vorrichtung 5 mit dem Rahmen 8 und den darin aufgenommenen berührungssensitiven Eingabefeld 6, dem drehbaren Ring 7 und den Schaltelementen 9 statt an der Mittelkonsole 1 auch an der Armlehne 3 angebracht sein kann. Auch in diesem Fall könnte der Rahmen 8 auf an der Armlehne 3 angebrachten Schienen 10 verschieblich sein.

In Fig. 5 ist zu erkennen, dass das berührungssensitive Eingabefeld 6 mit einem Abstand von einer Unterlage, also im vorliegenden Fall von der Mittelkonsole 1 oder der Armlehne 3 angeordnet sein kann, wobei der Abstand des berührungssensitiven Eingabefelds 6 von der Unterlage vorzugsweise mindestens 3 mm beträgt sollte, um einen schwebenden Eindruck zu erreichen. In einer nicht beanspruchten Alternative, wäre es jedoch auch möglich, das berührungssensitive Eingabefeld 6 direkt auf der Oberfläche der Mittelkonsole 1 oder der Armlehne 3 anzubringen. In weiteren, nicht beanspruchten Ausführungsformen könnte auf den das berührungssensitiven Eingabefeld 6 umgebenden drehbaren Ring 7 und/oder auf die Schaltelemente 9 verzichtet werden. Gegebenenfalls könnte auch auf den Rahmen 8 verzichtet werden, wenn das berührungssensitive Eingabefeld 6 unmittelbar an der jeweiligen Unterlage, also der Mittelkonsole 1 oder der Armlehne 3, angebracht wäre.

## Patentansprüche

1. Vorrichtung (5) zur Bedienung wenigstens einer Funktion eines Kraftfahrzeugs und/oder wenigstens eines in einem Kraftfahrzeug eingebauten Geräts, mit einem berührungssensitiven Eingabefeld (6), welches aus einem transparenten Material ausgebildet ist, und mit einer Unterlage (1,3),
wobei das berührungssensitive Eingabefeld (6) derart oberhalb der Unterlage (1,3) angeordnet ist, dass durch das berührungssensitive Eingabefeld (6) das Material und die Oberfläche der Unterlage (1,3) in einem Innenraum des Kraftfahrzeugs erkennbar ist, wobei das berührungssensitive Eingabefeld (6) mit einem Abstand von der Unterlage (1,3) angeordnet ist,
**dadurch gekennzeichnet, dass**
das berührungssensitive Eingabefeld (6) von einem drehbaren Ring (7) umgeben ist, welcher als Eingabeeinrichtung zur Bedienung wenigstens einer Funktion des Kraftfahrzeugs und/oder des in dem Kraftfahrzeug eingebauten Geräts ausgebildet ist.

2. Bedienvorrichtung nach Anspruch 1,
**dadurch gekennzeichnet, dass**
der Abstand des berührungssensitiven Eingabefelds (6) von der Unterlage (1,3) mindestens 3 mm beträgt.

3. Bedienvorrichtung nach Anspruch 1 oder 2,
**dadurch gekennzeichnet, dass**
das berührungssensitive Eingabefeld (6) an einer Mittelkonsole (1) des Kraftfahrzeugs angebracht ist.

4. Bedienvorrichtung nach Anspruch 1 oder 2,
**dadurch gekennzeichnet, dass**
das berührungssensitive Eingabefeld (6) an einer Armlehne (3) des Kraftfahrzeugs angebracht ist.

5. Bedienvorrichtung nach einem der Ansprüche 1 bis 4,
**dadurch gekennzeichnet, dass**
das berührungssensitive Eingabefeld (6) auf wenigstens einer Schiene (10) verschiebbar montiert ist.

## Claims

1. Device (5) for operating at least one function of a motor vehicle and/or at least one device installed in a motor vehicle, having a touch-sensitive input field (6) which is formed from a transparent material, and having a base (1, 3),
wherein the touch-sensitive input field (6) is arranged above the base (1, 3) in such a way that the material and the surface of the base (1, 3) is recognisable in an interior of the motor vehicle through the touch sensitive input field (6), wherein the touch-sensitive input field (6) is arranged at a distance from the base (1, 3),
**characterised in that** the touch-sensitive input field (6) is surrounded by a rotatable ring (7), which is formed as an input device for operating at least one function of the motor vehicle and/or of the device installed in the motor vehicle.

2. Operating device according to claim 1,
**characterised in that**
the distance of the touch-sensitive input field (6) from the base (1, 3) is at least 3 mm.

3. Operating device according to claim 1 or 2,
**characterised in that**
the touch-sensitive input field (6) is attached to a central console (1) of the motor vehicle.

4. Operating device according to claim 1 or 2,
**characterised in that**
the touch-sensitive input field (6) is attached to an armrest (3) of the motor vehicle.

5. Operating device according to one of claims 1 to 4,
**characterised in that**
the touch-sensitive input field (6) is mounted displaceably on at least one rail (10).

## Revendications

1. Dispositif (5) destiné à commander au moins une fonction d'un véhicule automobile et/ou au moins un appareil intégré dans un véhicule automobile, avec un champ d'entrée tactile (6) qui est réalisé en un matériau transparent et avec un support (1, 3),
dans lequel le champ d'entrée tactile (6) est agencé de telle sorte au-dessus du support (1, 3) que, à travers le champ d'entrée tactile (6), le matériau et la surface du support (1, 3) dans l'habitacle du véhicule automobile sont visibles, le champ d'entrée tactile (6) étant agencé à une certaine distance du support (1, 3),
**caractérisé en ce que** le champ d'entrée tactile (6) est entouré par un anneau tournant (7) qui est conçu comme un dispositif d'entrée destiné à commander au moins une fonction du véhicule automobile et/ou de l'appareil intégré dans le véhicule automobile.

2. Dispositif de commande selon la revendication 1, **caractérisé en ce que** la distance du champ d'entrée tactile (6) au support (1, 3) est égale à 3 mm au moins.

3. Dispositif de commande selon la revendication 1 ou 2, **caractérisé en ce que** le champ d'entrée tactile (6) est placé sur une console centrale (1) du véhicule automobile.

4. Dispositif de commande selon la revendication 1 ou 2, **caractérisé en ce que** le champ d'entrée tactile (6) est placé sur un accoudoir (3) du véhicule automobile.

5. Dispositif de commande selon l'une des revendications 1 à 4, **caractérisé en ce que** le champ d'entrée tactile (6) est monté coulissant sur au moins un rail (10).
